# EUROPEAN PATENT SPECIFICATION

(11) **EP 3 497 552 B1**
(45) Date of publication and mention of the grant of the patent: **07.06.2023**
(21) Application number: 17851124.2
(22) Date of filing: 13.09.2017
(51) Int. Cl.: G06F 3/0482, G06F 3/04886

(54) **METHOD FOR OUTPUTTING SCREEN ACCORDING TO FORCE INPUT AND ELECTRONIC DEVICE SUPPORTING THE SAME**
VERFAHREN FÜR AUSGABE EINES BILDSCHIRMS GEMÄSS DES KRAFTEINGANGS UND ELEKTRONISCHE VORRICHTUNG ZUR UNTERSTÜTZUNG DAVON
PROCÉDÉ DE GÉNÉRATION D'ÉCRAN EN FONCTION D'UNE ENTRÉE DE FORCE ET DISPOSITIF ÉLECTRONIQUE PRENANT EN CHARGE LEDIT PROCÉDÉ

(30) Priority: 13.09.2016 KR 20160118265
(43) Date of publication of application: 19.06.2019
(73) Proprietor: Samsung Electronics Co., Ltd., Suwon-si, Gyeonggi-do 16677 (KR)
(72) Inventor: KIM, Hye Won, Suwon-si, Gyeonggi-do 16677 (KR); KANG, Dong Kyun, Suwon-si, Gyeonggi-do 16677 (KR); KIM, Kyung Hwa, Suwon-si, Gyeonggi-do 16677 (KR); KIM, Na Hye, Suwon-si, Gyeonggi-do 16677 (KR); KIM, Woo Hyun, Suwon-si, Gyeonggi-do 16677 (KR); KIM, Ju Young, Suwon-si, Gyeonggi-do 16677 (KR); PARK, Mi Ji, Suwon-si, Gyeonggi-do 16677 (KR); PARK, Sung Won, Suwon-si, Gyeonggi-do 16677 (KR); SUNG, Ji Yeon, Suwon-si, Gyeonggi-do 16677 (KR); EUN, Dong Jin, Suwon-si, Gyeonggi-do 16677 (KR); LEE, Seung Yong, Suwon-si, Gyeonggi-do 16677 (KR); LEE, Jae Han, Suwon-si, Gyeonggi-do 16677 (KR); LEE, Jin A, Suwon-si, Gyeonggi-do 16677 (KR); CHANG, Min Young, Suwon-si, Gyeonggi-do 16677 (KR); CHOI, Kyung Lim, Suwon-si, Gyeonggi-do 16677 (KR); HONG, Seung Pyo, Suwon-si, Gyeonggi-do 16677 (KR); WANG, Jee Yeun, Suwon-si, Gyeonggi-do 16677 (KR); KIM, Ah Young, Suwon-si, Gyeonggi-do 16677 (KR); CHOI, Jun Ho, Suwon-si, Gyeonggi-do 16677 (KR); KI, Dae Hong, Suwon-si, Gyeonggi-do 16677 (KR); KIM, Hee Woon, Suwon-si, Gyeonggi-do 16677 (KR); PARK, Wan Je, Suwon-si, Gyeonggi-do 16677 (KR); BAE, Sung Chan, Suwon-si, Gyeonggi-do 16677 (KR); SEO, Jung Eui, Suwon-si, Gyeonggi-do 16677 (KR)
(74) Representative: Nederlandsch Octrooibureau
(86) International application number: PCT/KR2017/010063
(87) International publication number: WO 2018/052250

(56) References cited:
- EP-A1- 3 388 933
- KR-A- 20110 086 501
- US-A1- 2010 005 390
- US-A1- 2010 271 312
- US-A1- 2013 086 023
- US-A1- 2014 181 747
- US-A1- 2014 310 653
- US-A1- 2014 310 653
- US-A1- 2016 259 498

## Description

### Technical Field

The present disclosure relates to an electronic device and to a method for outputting a screen, which is executed in an electronic device.

### Background Art

Electronic devices, such as smartphones, tablet personal computers (PCs) or the like, may perform various functions such as wireless data communication, moving picture reproduction, and the searching of the Internet. The electronic devices may operate corresponding to various inputs, such as a touch input, a gesture input, and a voice input of a user. Recently, electronic devices, which detect force inputs based on pressure applied to displays by users and output content corresponding to the force inputs, have been introduced into markets.

The above information is presented as background information only to assist with an understanding of the present disclosure. No determination has been made, and no assertion is made, as to whether any of the above might be applicable as prior art with regard to the present disclosure.
US 2010/271312 A1 describes a method and electronic device for presenting user actuation targets on a touch sensitive display that includes a controller configured to determine a user actuation target arrangement having a hierarchy of precedence. A display driver is then configured to present the user actuation targets on the touch sensitive display in accordance with the user actuation target arrangement.
US 2016/259498 A1 describes an electronic device with a display, a touch-sensitive surface, and one or more sensors to detect intensity of contacts with the touch-sensitive surface: it displays a first user interface that includes a plurality of selectable objects; while a focus selector is at a location that corresponds to a respective selectable object, detects an input that includes detecting a contact on the touch-sensitive surface; and in response to detecting the input: in accordance with a determination that detecting the input includes detecting an increase in intensity of the contact that meets intensity criteria, displays a menu.
US 2014/0310653 A1 describes a device and a method of controlling a device. At least one selection area is displayed and a first input selecting a first selection area is detected. An application corresponding to the first selection area may be executed, in response to the first input selecting the first selection area in a first manner. EP 3 388 933 A1 describes a method for a touch input-based operation in an electronic device, and the device. The electronic device comprises: a touch sensing display; a unit for measuring the input strength of a touch sensed by the touch sensing display; and at least one processor for detecting a touch-sensed region and performing a control command corresponding to the input strength of the touch among a plurality of control commands mapped to a touch-sensed region.

### Disclosure of Invention

### Technical Problem

The electronic devices according to the related art operate in a manner of simply arranging items related to touch buttons in the case of outputting content corresponding to the force input. In this case, content less associated with a user may be output and thus the frequency that the user uses the force input may be reduced. In addition, since content is simply output, the user may feel unsatisfactory.

### Solution to Problem

In accordance with an aspect of the present disclosure, an electronic device according to claim 1 is provided.

### Advantageous Effects of Invention

In accordance with another aspect of the present disclosure, in the method for outputting the screen and the electronic device supporting the same, history information related to the device use characteristic by the user may be output, corresponding to the force input of the user. Accordingly, the utilization of the force input may be increased.

In accordance with another aspect of the present disclosure, in the method for outputting the screen and the electronic device supporting the same, specialized and summarized information is provided for the user. Accordingly, the user may simply use a previously executed function or a recommended function.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

The above and other aspects, features, and advantages of certain embodiments of the present disclosure will be more apparent from the following description taken in conjunction with the accompanying drawings, in which:
FIG. 1 is a view illustrating an electronic device in a network environment ;
FIG. 2 is a flowchart illustrating a method for outputting a screen;
FIG. 3 is a view illustrating that a force input is linked to a touch button of an e-mail app;
FIG. 4 is a view illustrating that a force input is linked to a control button of an e-mail app;
FIG. 5 is a view illustrating the setting of an image or a status message using a force input;
FIG. 6 is a view illustrating the use of a browser app through a force input;
FIG. 7 is a view illustrating the writing into an input template through a force input;
FIG. 8 is a view illustrating the editing of an image using a force input;
FIG. 9 is a view illustrating that a force input is linked to an image area of a photo editing app;
FIG. 10 is a view illustrating the use of an album app through a force input;
FIG. 11 is a view illustrating that a force input is linked to a moving picture editing app;
FIG. 12 is a view illustrating that a force input is linked to a memo app;
FIG. 13 is a view illustrating that a force input is linked to a drawing app;
FIG. 14 is a view illustrating that a force input is linked to a clock app;
FIG. 15 illustrates a block diagram of an electronic device; and
FIG. 16 illustrates a block diagram of a program module.

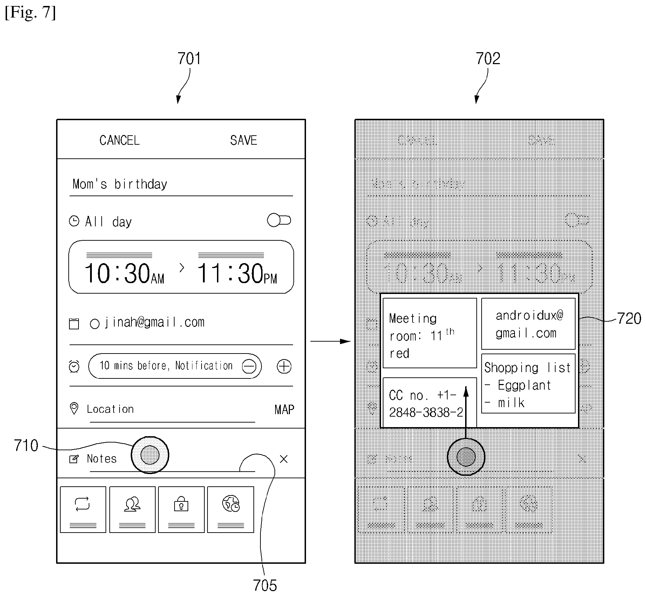

Throughout the drawings, it should be noted that like reference numbers are used to depict the same or similar elements, features, and structures.
The examples in the description and figures serve to illustrate one or more features of the claims. However, these examples, taken individually, do not necessarily explicitly disclose all features of the claims. Features of the independent claims are disclosed by the embodiment shown in Figure 7 and the corresponding passages of the description.

### Mode for the Invention

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In the disclosure disclosed herein, the expressions "have", "may have", "include" and "comprise", or "may include" and "may comprise" used herein indicate existence of corresponding features (for example, elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms are used only to distinguish an element from another element and do not limit the order and/or priority of the elements. For example, a first user device and a second user device may represent different user devices irrespective of sequence or importance. For example, without departing the scope of the present disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to the other element or an intervening element (for example, a third element) may be present. In contrast, when an element (for example, a first element) is referred to as being "directly coupled with/to" or "directly connected to" another element (for example, a second element), it should be understood that there are no intervening element (for example, a third element).

According to the situation, the expression "configured to" used herein may be used as, for example, the expression "suitable for", "having the capacity to", "designed to", "adapted to", "made to", or "capable of". The term "configured to (or set to)" must not mean only "specifically designed to" in hardware. Instead, the expression "a device configured to" may mean that the device is "capable of" operating together with another device or other components. CPU, for example, a "processor configured to (or set to) perform A, B, and C" may mean a dedicated processor (for example, an embedded processor) for performing a corresponding operation or a generic-purpose processor (for example, a central processing unit (CPU) or an application processor (AP)) which may perform corresponding operations by executing one or more software programs which are stored in a memory device.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), MP3 players, mobile medical devices, cameras, and wearable devices. According to various embodiments of the present disclosure, the wearable devices may include accessories (for example, watches, rings, bracelets, ankle bracelets, glasses, contact lenses, or head-mounted devices (HMDs)), cloth-integrated types (for example, electronic clothes), body-attached types (for example, skin pads or tattoos), or implantable types (for example, implantable circuits).

In some embodiments of the present disclosure, the electronic device may be one of home appliances. The home appliances may include, for example, at least one of a digital versatile disc (DVD) player, an audio, a refrigerator, an air conditioner, a cleaner, an oven, a microwave oven, a washing machine, an air cleaner, a set-top box, a home automation control panel, a security control panel, a TV box (for example, Samsung HomeSync^{™}, Apple TV^{™}, or Google TV^{™}), a game console (for example, Xbox^{™} or PlayStation^{™}), an electronic dictionary, an electronic key, a camcorder, or an electronic panel.

In another embodiment of the present disclosure, the electronic device may include at least one of various medical devices (for example, various portable medical measurement devices (a blood glucose meter, a heart rate measuring device, a blood pressure measuring device, and a body temperature measuring device), a magnetic resonance angiography (MRA), a magnetic resonance imaging (MRI) device, a computed tomography (CT) device, a photographing device, and an ultrasonic device), a navigation system, a global navigation satellite system (GNSS), an event data recorder (EDR), a flight data recorder (FDR), a vehicular infotainment device, electronic devices for vessels (for example, a navigation device for vessels and a gyro compass), avionics, a security device, a vehicular head unit, an industrial or home robot, an automatic teller's machine (ATM) of a financial company, a point of sales (POS) of a store, or an internet of things (for example, a bulb, various sensors, an electricity or gas meter, a spring cooler device, a fire alarm device, a thermostat, an electric pole, a toaster, a sporting apparatus, a hot water tank, a heater, and a boiler).

According to some embodiments of the present disclosure, the electronic device may include at least one of a furniture or a part of a building/structure, an electronic board, an electronic signature receiving device, a projector, or various measurement devices (for example, a water service, electricity, gas, or electric wave measuring device). In various embodiments of the present disclosure, the electronic device may be one or a combination of the aforementioned devices. The electronic device according to some embodiments of the present disclosure may be a flexible electronic device. Further, the electronic device according to an embodiment of the present disclosure is not limited to the aforementioned devices, but may include new electronic devices produced due to the development of technologies.

Hereinafter, electronic devices according to an embodiment of the present disclosure will be described with reference to the accompanying drawings. The term "user" used herein may refer to a person who uses an electronic device or may refer to a device (for example, an artificial electronic device) that uses an electronic device.

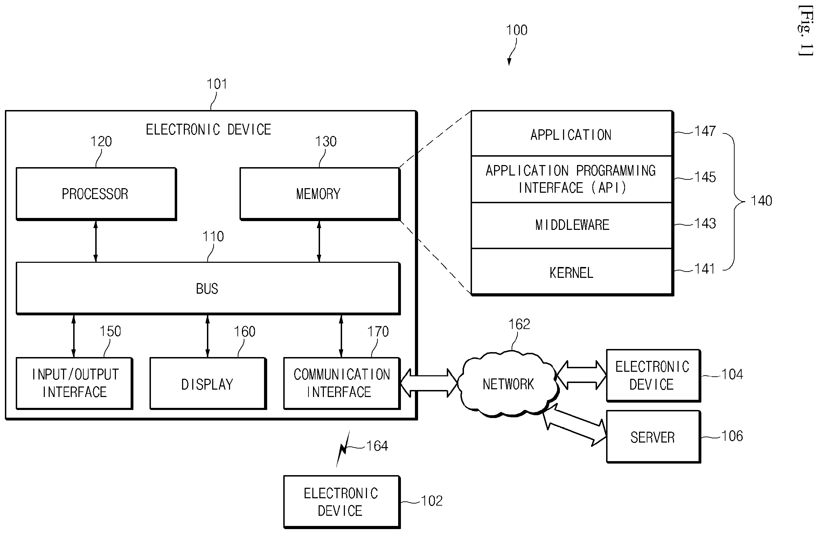

FIG. 1 illustrates an electronic device in a network environment according to an embodiment of the present disclosure.

Referring to FIG. 1, an electronic device 101 in a network environment 100 according to various embodiments of the present disclosure will be described. The electronic device 101 includes a processor 120, a memory 130, and a display 160. The electronic device 101 may include a bus 110, an input/output interface 150, and a communication interface 170. In various embodiments of the present disclosure, another element may be added to the electronic device 101.

The bus 110 may include a circuit for connecting the above-mentioned elements 110 to 170 to each other and transferring communications (e.g., control messages and/or data) among the above-mentioned elements.

The processor 120 may include at least one of a CPU, an AP, or a communication processor (CP). The processor 120 may perform data processing or an operation related to communication and/or control of at least one of the other elements of the electronic device 101.

The memory 130 may include a volatile memory and/or a nonvolatile memory. The memory 130 may store instructions or data related to at least one of the other elements of the electronic device 101. According to an embodiment of the present disclosure, the memory 130 may store software and/or a program 140. The program 140 may include, for example, a kernel 141, a middleware 143, an application programming interface (API) 145, and/or an application (or an application program) 147. At least a portion of the kernel 141, the middleware 143, or the API 145 may be referred to as an operating system (OS).

The kernel 141 may control or manage system resources (e.g., the bus 110, the processor 120, the memory 130, or the like) used to perform operations or functions of other programs (e.g., the middleware 143, the API 145, or the application program 147). Furthermore, the kernel 141 may provide an interface for allowing the middleware 143, the API 145, or the application 147 to access individual elements of the electronic device 101 in order to control or manage the system resources.

The middleware 143 may serve as an intermediary so that the API 145 or the application 147 communicates and exchanges data with the kernel 141.

Furthermore, the middleware 143 may handle one or more task requests received from the application 147 according to a priority order. For example, the middleware 143 may assign at least one application 147 a priority for using the system resources (e.g., the bus 110, the processor 120, the memory 130, or the like) of the electronic device 101. For example, the middleware 143 may handle the one or more task requests according to the priority assigned to the at least one application, thereby performing scheduling or load balancing with respect to the one or more task requests.

The API 145, which is an interface for allowing the application 147 to control a function provided by the kernel 141 or the middleware 143, may include, for example, at least one interface or function (e.g., instructions) for file control, window control, image processing, character control, or the like.

The input/output interface 150 may serve to transfer an instruction or data input from a user or another external device to (an)other element(s) of the electronic device 101. Furthermore, the input/output interface 150 may output instructions or data received from (an)other element(s) of the electronic device 101 to the user or another external device.

The display 160 may include, for example, a liquid crystal display (LCD), a light-emitting diode (LED) display, an organic light-emitting diode (OLED) display, a microelectromechanical systems (MEMS) display, or an electronic paper display. The display 160 may present various content (e.g., a text, an image, a video, an icon, a symbol, or the like) to the user. The display 160 may include a touch screen, and may receive a touch, gesture, proximity or hovering input from an electronic pen or a part of a body of the user.

According to various embodiments, a display 160 may detect a force input based on pressure applied to the display 160 from the outside. In the case that an internal electrical characteristic of the display 160 is changed according to the force input, the changed information may be transmitted to a processor 120. The processor 120 may control an application operating according to the force input, based on the changed information.

The communication interface 170 may set communications between the electronic device 101 and an external device (e.g., a first external electronic device 102, a second external electronic device 104, or a server 106). For example, the communication interface 170 may be connected to a network 162 via wireless communications or wired communications so as to communicate with the external device (e.g., the second external electronic device 104 or the server 106).

The wireless communications may employ at least one of cellular communication protocols such as long-term evolution (LTE), LTE-advance (LTE-A), code division multiple access (CDMA), wideband CDMA (WCDMA), universal mobile telecommunications system (UMTS), wireless broadband (WiBro), or global system for mobile communications (GSM). The wireless communications may include, for example, short-range communications 164. The short-range communications may include at least one of wireless fidelity (Wi-Fi), Bluetooth, near field communication (NFC), magnetic stripe transmission (MST), or GNSS.

The MST may generate pulses according to transmission data and the pulses may generate electromagnetic signals. The electronic device 101 may transmit the electromagnetic signals to a reader device such as a POS (point of sales) device. The POS device may detect the magnetic signals by using a MST reader and restore data by converting the detected electromagnetic signals into electrical signals.

The GNSS may include, for example, at least one of global positioning system (GPS), global navigation satellite system (GLONASS), BeiDou navigation satellite system (BeiDou), or Galileo, the European global satellite-based navigation system according to a use area or a bandwidth. Hereinafter, the term "GPS" and the term "GNSS" may be interchangeably used. The wired communications may include at least one of universal serial bus (USB), high definition multimedia interface (HDMI), recommended standard 832 (RS-232), plain old telephone service (POTS), or the like. The network 162 may include at least one of telecommunications networks, for example, a computer network (e.g., local area network (LAN) or wide area network (WAN)), the Internet, or a telephone network.

The types of the first external electronic device 102 and the second external electronic device 104 may be the same as or different from the type of the electronic device 101. According to an embodiment of the present disclosure, the server 106 may include a group of one or more servers. A portion or all of operations performed in the electronic device 101 may be performed in one or more other electronic devices (e.g., the first electronic device 102, the second external electronic device 104, or the server 106). When the electronic device 101 should perform a certain function or service automatically or in response to a request, the electronic device 101 may request at least a portion of functions related to the function or service from another device (e.g., the the first electronic device 102, the second external electronic device 104, or the server 106) may perform the requested function or additional function, and may transfer a result of the performance to the electronic device 101. The electronic device 101 may use a received result itself or additionally process the received result to provide the requested function or service. To this end, for example, a cloud computing technology, a distributed computing technology, or a client-server computing technology may be used.

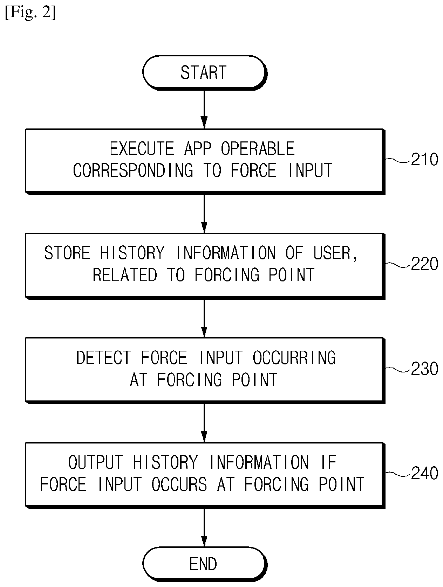

FIG. 2 is a flowchart illustrating a method for outputting a screen according to various embodiments of the present disclosure.

Referring to FIG. 2, the processor 120 executes an application (app) that is operable corresponding to the force input based on the pressure applied to the display 160 in operation 210. For example, the app may include at least one of an e-mail app, a social network service (SNS) app, a web-browser app, a schedule app, a photo app, a photo editing app, a moving picture editing app, a memo app, a drawing app, and a clock app.

The processor 120 stores history information, which is related to a forcing point, on use of the electronic device 101 by a user in operation 220. The forcing point may be a point, to which a force input is applicable, on the execution screen of the app. According to various embodiments, the processor 120 may additionally mark the point (forcing point) allowing the force input. For example, the processor 120 may mark the forcing point with a button, which allows the force input, in specific color or pattern (e.g., with a red rim), thereby indicating the user that the marked forcing point is a forcing point at which the processor 120 executes an additional function through the force input.

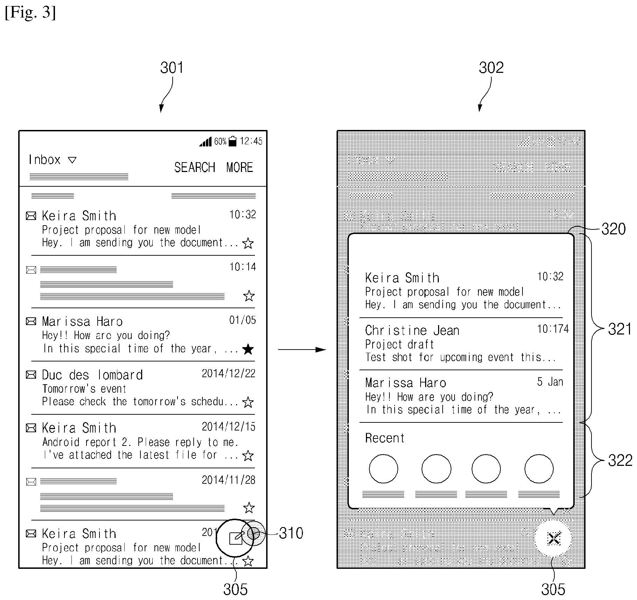

According to various embodiments, the history information may be recording information on a manner of allowing the user to employ or utilize the electronic device 101. The history information may be stored with a link to a function executed at a forcing point of the user. Additional information to the history information may be provided through the description made with reference to FIGS. 3 to 14.

The processor 120 may detect the occurrence of the force input to the forcing point in operation 230. The processor 120 may determine whether there occurs a force input, which represents a specified threshold value or more, to the forcing point (or at less than a specific distance from the forcing point).

The processor 120 may output the history information on an area adjacent to the forcing point if there occurs the force input to the forcing point in operation 240. If the user selects one piece of information from the output history information, a function related to the selected information may be executed. Additional information on the method for outputting the screen according to the force input may be provided through the description made with reference to FIGS. 3 to 14.

FIG. 3 is a view illustrating that a force input is linked to a touch button of an e-mail app according to various embodiments of the present disclosure. FIG. 3 is provided for the illustrative purpose, but the present disclosure is not limited thereto.

Referring to FIG. 3, the processor 120 may link a control button, which is output from the e-mail app, to a force input 310. Various points on an app execution screen may be linked to the force input 310. For example, forcing points for various control buttons (e.g., buttons for e-mail search ("SEARCH"), e-mail writing, and the like), the name of a sender of an e-mail, a preview, and the like may be linked to the force input 310.

In the case that the user presses the control button linked to the force input with a preset pressure or more, various pieces of content may be output depending on patterns that the user uses the electronic device 101.

If the e-mail app is executed on a screen 301, the processor 120 may output various control buttons and the list of received e-mails. The control button may be displayed on an upper portion or a lower portion of the screen 301. For example, control buttons for the e-mail search, additional information mark, e-mail box selection, and the like may be output to the upper portion of the screen 301. An e-mail writing button 305 may be output on the lower portion of the screen 301.

According to various embodiments, the processor 120 may link the e-mail writing button 305 to the force input 310. If the user presses the e-mail writing button 305 with a preset pressure or more, an additional window 320 may be output to display content linked to the e-mail writing button 305.

According to various embodiments, a method for outputting a screen, executed in an electronic device, includes executing an application that is operable corresponding to a force input based on pressure applied to a display, storing history information on use of the electronic device by a user, wherein the history information is related to a forcing point, to which the force input is applied, on an execution screen of the application, detecting occurrence of the force input to the forcing point, and outputting the history information to an area adjacent to the forcing point if the force input occurs.

According to various embodiments, the storing of the history information includes storing the history information if the application starts.

According to various embodiments, the storing of the history information includes determining a control button, which is displayed on the display, as the forcing point while the application is executed.

According to various embodiments, the outputting of the history information includes outputting a shortcut, which is used to execute at least some of a plurality of functions executable through the control button, to the area.

According to various embodiments, the outputting of the history information further includes determining the some of the plurality of functions based on a use frequency of the user.

According to various embodiments, the storing of the history information includes storing the history information with a link to an attribute of a field of an input template related with the application.

According to various embodiments, the storing of the history information includes receiving user information managed by a different application distinguished from the application, and storing the history information based on the received user information.

According to various embodiments, the outputting of the history information includes dividing the area into a plurality sub areas and outputting the history information having mutually different attributes to the sub areas.

According to various embodiments, the outputting of the history information includes outputting the history information to the area, together with a separate forcing point.

According to various embodiments, the storing of the history information includes storing recommendation information, which is based on a preset condition, as the history information, if the history information on the use of the electronic device by the user is absent.

According to various embodiments, the application includes at least one of an e-mail application, an SNS application, a web-browser application, a schedule application, a photo application, a photo editing application, a moving picture editing application, a memo application, a drawing application, or a clock application.

Although FIG. 3 illustrates that the e-mail writing button 305 is the forcing point linked to the force input 310, the present disclosure is not limited thereto.

According to various embodiments, the processor 120 may store history information related to the forcing point in a buffer or a memory in the case that an app (e.g., an e-mail app), to which the force input 310 is applicable, is executed.

For example, in the case that the forcing point is the e-mail writing button 305, the history information may be the list of e-mails which are received most recently to the user or may be the list of counterparts having the largest number of histories of sending or receiving e-mails together with the user.

If there occurs the force input, which represents a specified threshold value or more, to the forcing point (or at less than the specific distance from the forcing point), the processor 120 may output the additional window 320 on a screen 302.

According to various embodiments, the additional window 320 may be provided adjacent to the forcing point. For example, at least a portion of the additional window 320 may be linked to the forcing point through an arrow or the like. The additional window 320 may be displayed in various shapes such as a circular shape, a rectangular shape, or the like.

The additional window 320 may display history information related to the user and the forcing point. For example, the additional window 320 may display the list of e-mails that are recently received to the user or the information on counterparts who frequently send e-mails, depending on the recent e-mail use history of the user.

According to various embodiments, the additional window 320 may include a plurality of areas, and multiple options of history information having mutually different attributes may be displayed on the areas, respectively. For example, the additional window 320 may include a first area 321 and a second area 322. The first area 321 may display the list of e-mails, which are not read by the user, in the list of e-mails recently received. The second area 322 may display contact information of counterparts who frequently contact with the user.

If the user selects one from multiple options of content displayed on the additional window 320, a function related to the selected content may be executed. For example, if the user selects one e-mail from the list of the recently received e-mails, which is displayed on the additional window 320, the user may display the content of the selected e-mail in full screen.

According to various embodiments, the processor 120 may select content displayed on the additional window 320 in various manners. For example, the processor 120 may employ a manner of terminating the force input 310 and selecting content through an additional touch input, a manner of selecting content through multiple touches, or a manner of selecting content while maintaining the touch state of the force input 310.

According to various embodiments, the additional window 320 may include an additional forcing point. For example, contact information of each of counterparts who are displayed on the additional window 320 and frequently contact with the user may be set as an individual forcing point. If the user generates a force input to one contact information, an additional window may be separately created such that an e-mail received from the contact information is displayed.

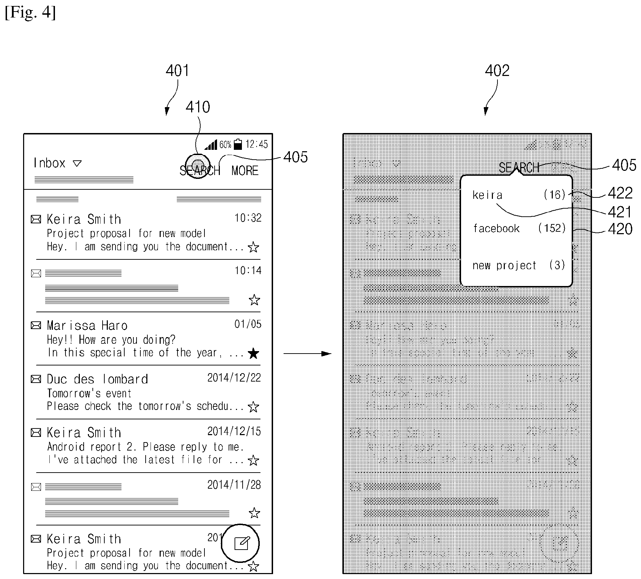

FIG. 4 is a view illustrating that a force input is linked to a control button of an e-mail app according to various embodiments of the present disclosure. FIG. 4 is provided for the illustrative purpose, but the present disclosure is not limited thereto.

Referring to FIG. 4, the processor 120 may link a control button (e.g., a button ("SEARCH") for e-mail search or a button ("MORE") execution of an additional function) output from the e-mail app to a force input 410.

The processor 120 may link an e-mail search button 405 to the force input 410 on a screen 401. If there occurs the force input 410, which represents a specified threshold value or more, at the e-mail search button 405, the processor 120 may output an additional window 420.

The processor 120 may output, on a screen 402, the additional window 420 for displaying content linked to the e-mail search button 405. The additional window 420 may display history information related to the e-mail search button 405. For example, the additional window 420 may display search words 421, which are recently searched by the user, and the number 422 of search results. If the user selects one from the search words 421 displayed on the additional window 420, detailed search information may be displayed in full screen.

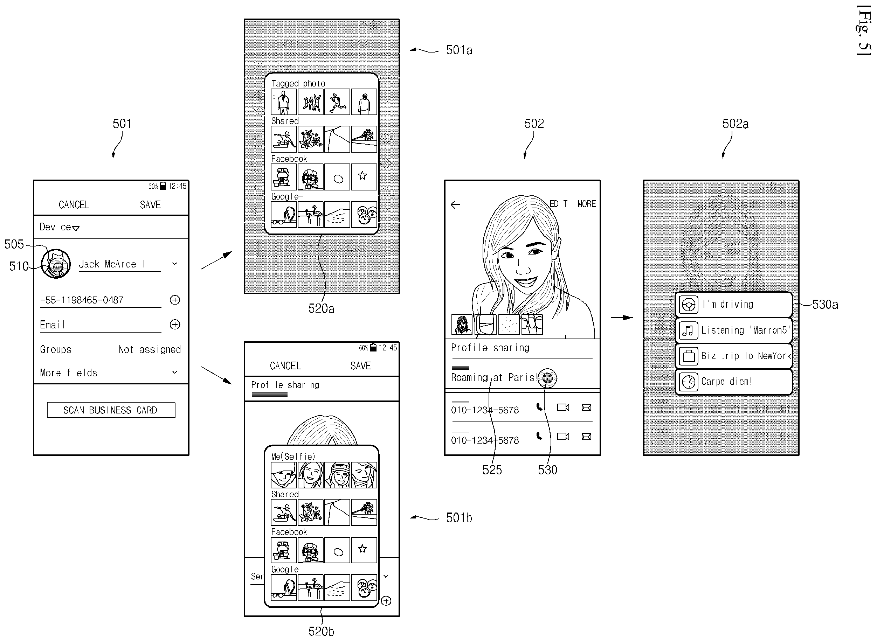

FIG. 5 is a view illustrating the setting of an image or a status message using a force input according to various embodiments of the present disclosure. FIG. 5 is provided for the illustrative purpose, but the present disclosure is not limited thereto.

Referring to FIG. 5, the processor 120 may output content for inputting an image or a status image by using the force input. The user may select a desired image or a desired status message from history information specialized to the user through the force input. Although FIG. 5 illustrates the setting of an image or a status message on SNS app screens 501 and 502 using the force input, the present disclosure is not limited thereto. For example, the force input may be applied even to the case that the name, the nickname, or a phone number of the user is input.

The processor 120 may link an image setting area (or filed) 505 to a force input 510 through an SNS app on the SNS app screen 501. If the user presses the image setting area 505 with the preset pressure or more, the processor 120 may output, on a screen 501a, an additional window 520a for inserting an image into the image setting area 505.

According to various embodiments, the processor 120 blurs remaining areas except an area, to which the additional window 520a is displayed, such that the user concentrates on the additional window 520a.

According to various embodiments, the processor 120 may display, on the additional window 520, a photo tagged in a photo gallery, a photo recently captured, or a profile photo linked to SNS.

According to various embodiments, the processor 120 may store, in a buffer, history information (or image) related to the image setting area 505 in the form of a thumbnail in advance, if the SNS app starts. The processor 120 may output the thumbnail image, which is stored in the buffer, on the additional window 520a if the force input 510 occurs.

The processor 120 may display, on a screen 501b, a background area except an area, to which an additional window 520b is displayed, without additionally blurring the background area. If the user selects one from images displayed on the additional window 520b, the selected image may be applied to the background area in real time.

According to various embodiments, the processor 120 may load images stored in the memory through another app and may display the images on the additional window 520b. For example, if a selfie image is stored in the memory through a camera app, the processor 120 may display a thumbnail image of the selfie image on the additional window 520b.

The processor 120 may link, on the screen 502, a status message setting area (or filed) 525 with a force input 530 through an SNS app. If the user presses the status message setting area 525 with a preset pressure or more, the processor 120 may output, on a screen 502a, an additional window 530a for inserting a status message.

According to various embodiments, the processor 120 blurs remaining areas except an area, to which the additional window 530a is displayed, such that the user concentrates on the additional window 530a.

According to various embodiments, the processor 120 may display, on the additional window 530a, words recently input, words frequently input, recommended words through photo recognition, or the like. The user may simply set the status message by selecting one from the words displayed on the additional window 530a instead of recording the status message through a keyboard app.

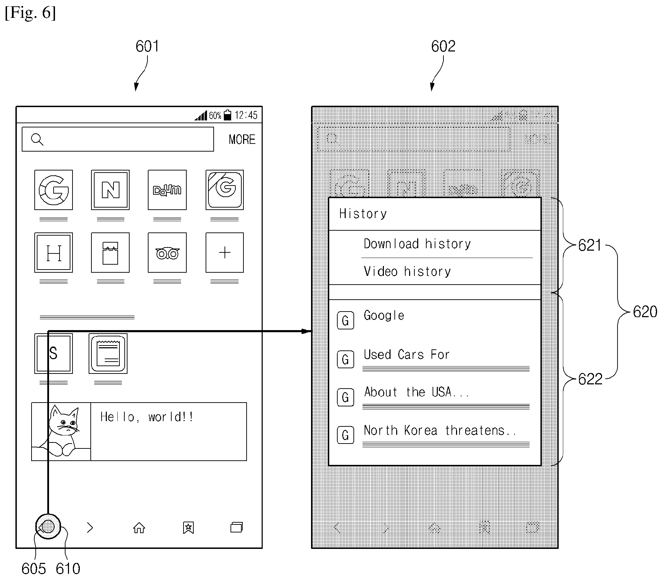

FIG. 6 is a view illustrating the use of a browser app through a force input according to various embodiments of the present disclosure. FIG. 6 is provided for the illustrative purpose, but the present disclosure is not limited thereto.

Referring to FIG. 6, the processor 120 may link a control button (e.g., a back button, a forward button, a home button, a setting button, or the like), which is output from the browser app, to a force input 610. Although FIG. 6 illustrates that a back button 605 among the control buttons is linked to the force input 610, the present disclosure is not limited thereto.

The processor 120 may link, on a screen 601, the back button 605, which is positioned on a menu bar at the lower portion of the screen 601, to the force input 610. If the user presses the back button 605 with a preset pressure or more, the processor 120 may output an additional window 620 for displaying content linked to the back button 605.

The processor 120 may store history information of the user, which is related to the back button 605. According to various embodiments, the processor 120 may start storing the history information if a browser app starts.

If there occurs the force input, which represents a specified threshold value or more, at the back button 605, the processor 120 may output the additional window 620. The additional window 620 may display history information related to the back button 605. For example, the additional window 620 may display the list of web-pages which are recently visited by the user.

According to various embodiments, the processor 120 may, on a screen 602, divide the additional window 620 into a plurality of areas and may output multiple options of history information having mutually different attributes on the areas. For example, the processor 120 may output, on a first area 621 of the additional window 620, a shortcut to a file downloaded by the user, a shortcut to a video file recently downloaded, or the like. The processor 120 may output, on a second area 622 of the additional window 620, the specified number (e.g., 5) of web-sites which are recently visited by the user.

According to various embodiments, the processor 120 may output, on the additional window 620, results, which are filtered from the history information according to a preset condition. For example, the processor 120 may output, on the additional window 620, only sites having the same domain among the web-sites recently visited by the user. For example, the processor 120 may select sites, which are linked to a domain of "Google", among the sites recently visited by the user and may output the selected sites on the additional window 620.

FIG. 7 is a view illustrating the writing into an input template through a force input according to various embodiments of the present disclosure. FIG. 7 is provided for the illustrative purpose, but the present disclosure is not limited thereto.

Referring to FIG. 7, the processor 120 may link a field constituting an input template to a force input 710. The input template may be a window output in a preset shape such that the user inputs an image or a text.

For example, an address list app may output an input template including a field, such as a field for a name, a phone number, an address, or the like, to store new contact information. The user may input data into some fields or all fields and may store the contact information.

The processor 120 may link, on a screen 701, an input field 705, which is used for inputting a text, to a force input 710 through a schedule app.

On a screen 702, if the user presses the input field 705 with a preset pressure or more, a text having the form which is able to be filled in the input field 705 is output on an additional window 720. A text, which has been copied and stored in a clipboard, is displayed on the additional window 720. The user may select one of the texts displayed on the additional window 720 and may simply input information into the input field 705.

Although FIG. 7 illustrates the case that a text is input, the present disclosure is not limited thereto. For example, in the case that the input field 705 has an attribute of inputting an image, the processor 120 outputs, on the additional window 720, an image, which has been recently copied and stored in a clipboard by the user, in the form of a thumbnail.

The additional window 720 includes a plurality of areas, and multiple options of history information having mutually different attributes are displayed on the areas. On the additional window 720, image data is displayed in a first area and text data is displayed in a second area.

The processor 120 filters and displays relevant content according to the attributes of the input field 705, depending on the attributes of the input field 705. For example, the processor 120 may display content related to a location if the force input 710 occurs on a field of "Location". The processor 120 may display content, such as an e-mail address or a name, if the force input 710 occurs on a field of "Invitees". In addition, the processor 120 may display texts of a note app, a memo app, or a clipboard if the force input 710 occurs on a field of "Notes".

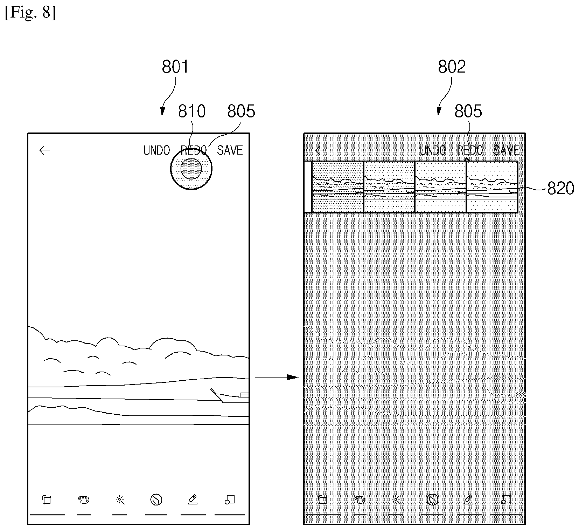

FIG. 8 is a view illustrating the editing of an image using a force input according to various embodiments of the present disclosure. FIG. 8 is provided for the illustrative purpose, but the present disclosure is not limited thereto.

Referring to FIG. 8, the processor 120 may link a control button (e.g., a filter button and an image effect button at a lower portion of the screen, or an editing cancel button ("UNDO"), an editing repetition button ("REDO"), or a save button ("SAVE") at the upper portion of the screen), which is output from an album app or a photo editing app, to a force input 810.

The processor 120 may link an editing repetition button 805 to the force input 810 on a screen 801. If the user presses the editing repetition button 805 with a preset pressure or more, an additional window 820 may be output.

The processor 120 may output, on a screen 802, the additional window 820 for displaying content linked to the editing repetition button 805. For example, on the additional window 820, the processor 120 may output preview images in a time sequence depending on the history of editing photos by the user. The user may return the editing status of the photo to a desired editing status by repeatedly returning editing statuses which are previously performed.

According to various embodiments, if there is absent an image stored in relation to an editing repetition item, the processor 120 may display, on the additional window 820, a preview image depending on an editing pattern by the user. For example, in the case that the user employs 10 brightness adjustments, five filter applications, and three decoration sticker attachments through a photo editing app, the processor 120 may output an image, which is subject to brightness adjustment or filter application, in the form of a thumbnail image.

Although FIG. 8 illustrates that the editing repetition button 805 is linked to the force input 810, the present disclosure is not limited thereto. For example, if there occurs the force input 810 at an editing start button at the lower portion of the screen, the processor 120 may display an editing tool, which has been recently used, in the additional window 820.

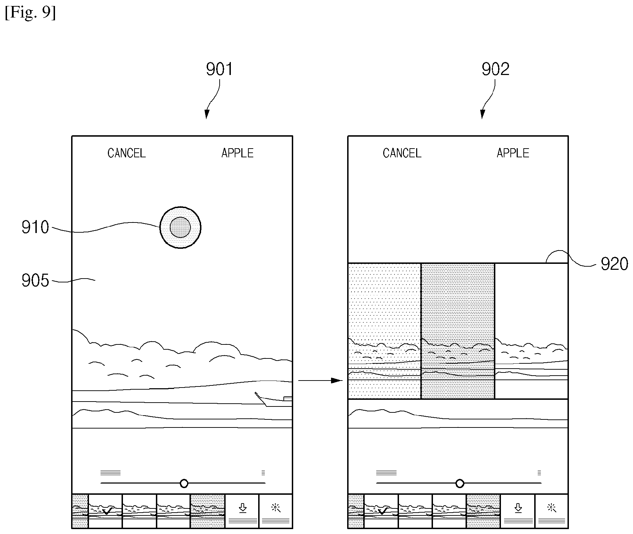

FIG. 9 is a view illustrating that a force input is linked to an image area of a photo editing app according to various embodiments of the present disclosure. FIG. 9 is provided for the illustrative purpose, but the present disclosure is not limited thereto.

Referring to FIG. 9, on a screen 901, the processor 120 may link an image display area 905 to a force input 910 instead of the form of a control button displayed on the screen, different from the case illustrated in FIG. 8. The image display area 905 may be an area in which a photo editing effect is directly exhibited. If there occurs the force input 910, which represents a specified threshold value or more, in the image display area 905, the processor 120 may output an additional window 920.

The processor 120 may output, on a screen 902, the additional window 920 for exhibiting effects applicable to the image display area 905. According to various embodiments, the processor 120 may display, on the additional window 920, a preview image depending on an editing pattern by the user. For example, in the case that the user adjusts transparency in larger number, the processor 120 may output, on the additional window 920, a plurality of images having different transparencies if there occurs the force input 910.

According to various embodiments, in the case that images at a plurality of layers overlay with each other, the processor 120 may output, on the additional window 920, a thumbnail image for each layer. The processor 120 may move a layer selected by the user to the highest layer or may change the sequence of stacking layers in the order selected by the user.

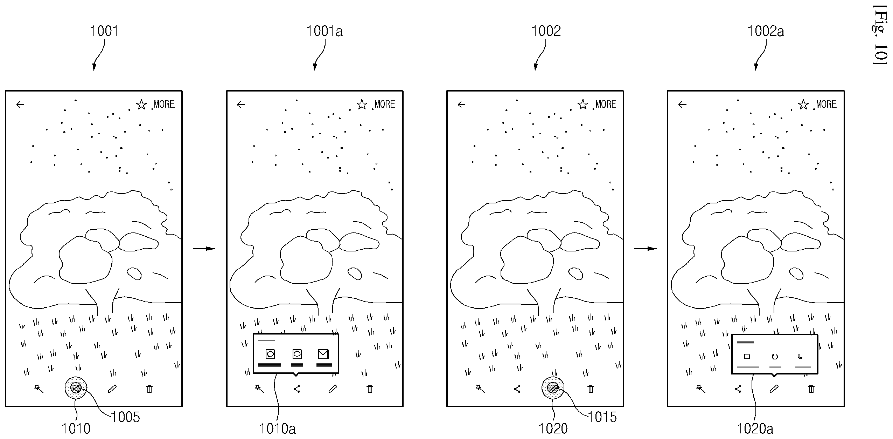

FIG. 10 is a view illustrating the use of an album app through a force input according to various embodiments of the present disclosure.

Referring to FIG. 10, the processor 120 may link a control button (e.g., a photo editing button, a sharing button, a deletion button, or the like), which is output from the album app, to a force input 1010.

The processor 120 may link a sharing button 1005 to the force input 1010 on a screen 1001. If there occurs the force input 1010, which represents a specified threshold value or more, at the sharing button 1005, the processor 120 may output an additional window 1010a.

The processor 120 may output, on a screen 1001a, the additional window 1010a for displaying content linked to the sharing button 1005. The additional window 1010a may display history information related to the sharing button 1005.

For example, the additional window 1010a may sequentially display shortcuts to some apps representing the highest use frequency, which is selected from the list of SNS apps recently used by the user. If the user selects one app from the list of the SNS apps displayed on the additional window 1010a, the app may be executed.

Alternatively, the additional window 1010a may sequentially display shortcuts to some contacts representing the highest message transmission frequency, which is selected from an address list of the user. If the user selects one address from contact information displayed on the additional window 1010a, a message app is executed to transmit a photo to the address.

The processor 120 may link a photo editing button 1015 to the force input 1010 on a screen 1002. If there occurs the force input 1010, which represents a specified threshold value or more, at the photo editing button 1015, the processor 120 may output an additional window 1020a.

The processor 120 may output, on a screen 1002a, the additional window 1020a for displaying content linked to the photo editing button 1015. The additional window 1020a may display history information related to the photo editing button 1015.

For example, the additional window 1020a may sequentially display some tools (e.g., 3) representing the highest frequency, which are selected from tools recently used by the user. If the user selects one from the photo editing tools displayed on the additional window 1020a, a relevant editing function is applicable to a photo which is being output.

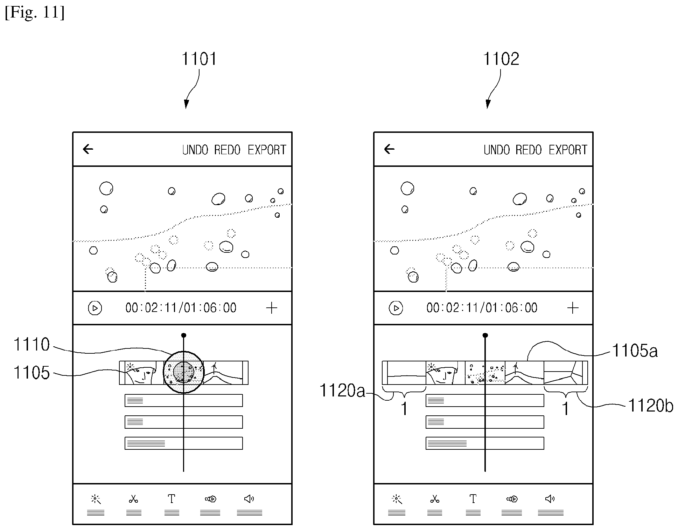

FIG. 11 is a view illustrating that a force input is linked to a moving picture editing app according to various embodiments of the present disclosure.

Referring to FIG. 11, the processor 120 may link a control button (e.g., a button for editing cancel, editing repetition, storing, sharing, editing starting, text inputting, or the like), which is output from the moving picture editing app, to a force input 1110.

The processor 120 may link a video clip selection box 1105 to the force input 1110 on a screen 1101. If there occurs the force input 1110, which represents a specified threshold value or more, at the video clip selection box 1105, the processor 120 may output additional areas 1120a and 1120b.

The processor 120 may output, on a screen 1102, the additional areas 1120a and 1120b for displaying content linked to the video clip selection box 1105. The additional areas 1120a and 1120b may display history information related to the editing of the moving picture. For example, the additional areas 1120a and 1120b may display an area, which is trimmed as the user recently removes the area, in opaque color as compared with the color of an image displayed on the video clip selection box 1105. In the case that the user checks the trimmed area, the user may simply check the trimmed area through the force input 1110 without changing the size of the video clip selection box 1105.

Although FIG. 11 illustrates the case that a moving picture is edited, the present disclosure is not limited thereto. For example, the above-described link to the force input 1110 may be applicable to the case of editing an audio clip.

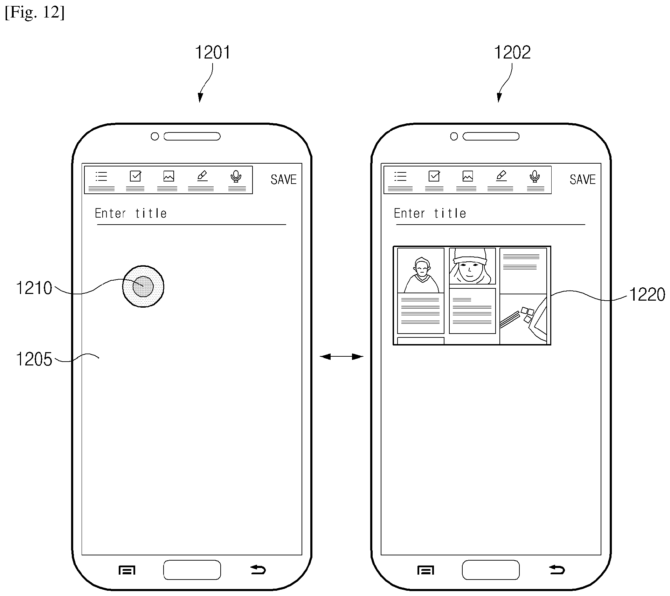

FIG. 12 is a view illustrating that a force input is linked to a memo app according to various embodiments of the present disclosure.

Referring to FIG. 12, the processor 120 may link a control button (e.g., a memo starting button, a memo storing button, a handwriting effect button, or the like), which is output from the e-mail app, or a handwriting area 1205 to a force input 1210. Although FIG. 12 illustrates that the handwriting area 1205 is linked to the force input 1210, the present disclosure is not limited thereto.

The processor 120 may link the handwriting area 1205 to the force input 1210 on a screen 1201. If there occurs the force input 1210, which represents a specified threshold value or more, in the handwriting area 1205, the processor 120 may output an additional window 1220.

The processor 120 may output, on a screen 1202, the additional window 1220 for displaying content linked to the handwriting area 1205. The additional window 1220 may display history information that is able to be written on the handwriting area 1205. For example, the additional window 1220 may display data recently stored in a clipboard by the user.

If the user selects one from multiple options of content (e.g., an image or a text) displayed on the additional window 1220, the selected content may be written in the handwriting area 1205. The user may simply write content, which is stored in the clipboard, on the handwriting area 1205 through one force input 1210 instead of performing two phases of long pressing and entering the clipboard.

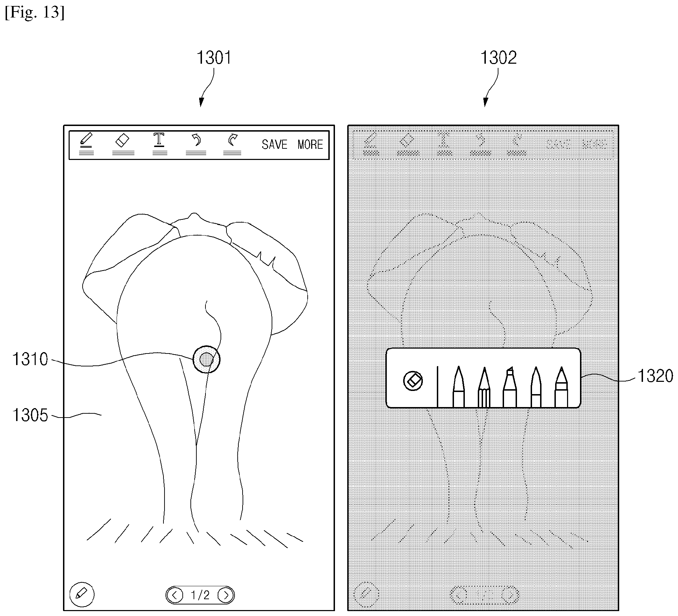

FIG. 13 is a view illustrating that a force input is linked to a drawing app according to various embodiments of the present disclosure.

Referring to FIG. 13, the processor 120 may link a control button (e.g., a drawing starting button, a drawing storing button, a drawing effect button, or the like), which is output from the drawing app, to a force input 1310. Although FIG. 13 illustrates that a drawing area 1305 is linked to the force input 1310, the present disclosure is not limited thereto.

The processor 120 may link the drawing area 1305 to the force input 1310 on a screen 1301. If there occurs the force input 1310, which represents a specified threshold value or more, in the drawing area 1305, the processor 120 may output an additional window 1320.

The processor 120 may output, on a screen 1302, the additional window 1320 for displaying content linked to the drawing area 1305. The additional window 1320 may display history information related to an effect applicable to the drawing area 1305. For example, the additional window 1320 may display a drawing tool and an erasing tool which are recently used by the user.

If the user selects one of the tools displayed on the additional window 1320, the effect produced by the selected tool may be directly exhibited on the drawing area 1305. The user may simply use a desired drawing tool through one force input 1310.

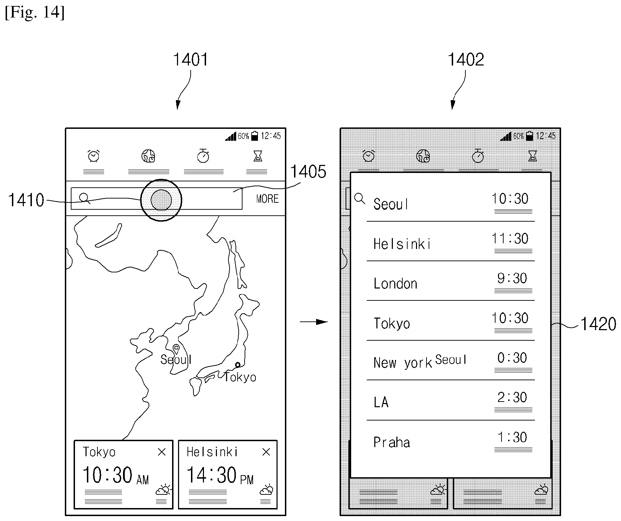

FIG. 14 is a view illustrating that a force input is linked to a clock app according to various embodiments of the present disclosure.

Referring to FIG. 14, the processor 120 may link a control button (e.g., an alarm setting button, a time setting button, a region search button, or the like), which is output from the clock app, to a force input 1410.

The processor 120 may link a region search button 1405 to the force input 1410 on a screen 1401. If there occurs the force input 1410, which represents a specified threshold value or more, at the region search button 1405, the processor 120 may output an additional window 1420.

The processor 120 may output, on a screen 1402, the additional window 1420 for displaying content linked to the region search button 1405. The additional window 1420 may display history information related to the region search button 1405. For example, the additional window 1420 may display the list of regions, which are recently searched by the user, or the list of cities, time of which is checked on a map, in a time sequence. If the user selects one region, the map and the current time of the selected region may be displayed in full screen.

According to various embodiments, the processor 120 may be provided with information on the schedule of the user or the region of interest to the user through another app and may display the additional window 1420 based on the information. For example, the processor 120 may extract the list of cities of interest to the user based on the information on the schedule stored in a schedule app. Alternatively, the processor 120 may extract the list of the cities of interest to the user by analyzing a mobile ticket included in a message app.

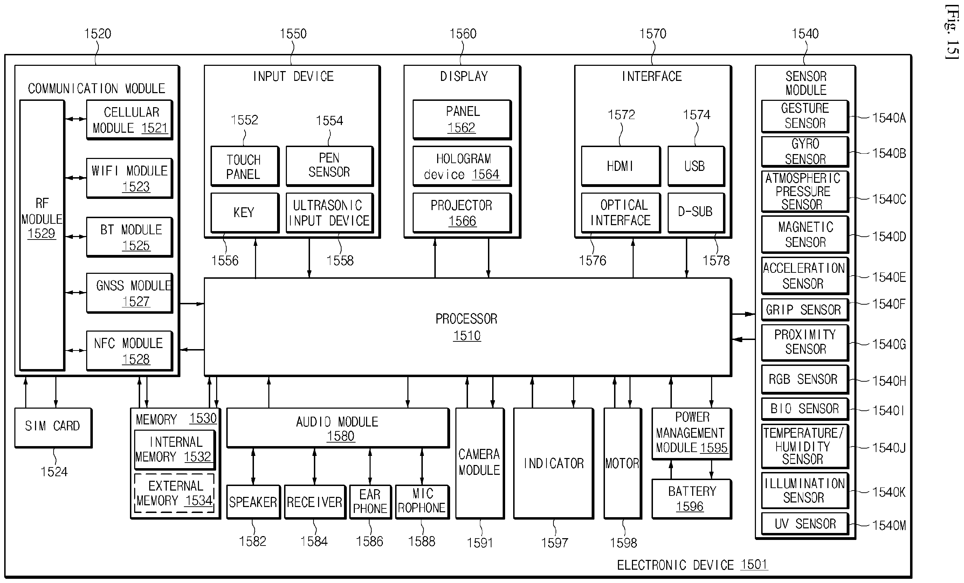

FIG. 15 is a block diagram illustrating an electronic device according to an embodiment of the present disclosure.

Referring to FIG. 15, an electronic device 1501 may include, for example, a part or the entirety of the electronic device 101 illustrated in FIG. 1. The electronic device 1501 may include at least one processor (e.g., AP) 1510, a communication module 1520, a subscriber identification module (SIM) 1524, a memory 1530, a sensor module 1540, an input device 1550, a display 1560, an interface 1570, an audio module 1580, a camera module 1591, a power management module 1595, a battery 1596, an indicator 1597, and a motor 1598.

The processor 1510 may run an operating system or an application program so as to control a plurality of hardware or software elements connected to the processor 1510, and may process various data and perform operations. The processor 1510 may be implemented with, for example, a system on chip (SoC). According to an embodiment of the present disclosure, the processor 1510 may further include a graphic processing unit (GPU) and/or an image signal processor. The processor 1510 may include at least a portion (e.g., a cellular module 1521) of the elements illustrated in FIG. 15. The processor 1510 may load, on a volatile memory, an instruction or data received from at least one of other elements (e.g., a nonvolatile memory) to process the instruction or data, and may store various data in a nonvolatile memory.

The communication module 1520 may have a configuration that is the same as or similar to that of the communication interface 170 of FIG. 1. The communication module 1520 may include, for example, a cellular module 1521, a Wi-Fi module 1523, a Bluetooth (BT) module 1525, a GNSS module 1527 (e.g., a GPS module, a GLONASS module, a BeiDou module, or a Galileo module), a NFC module 1528, and a radio frequency (RF) module 1529.

The cellular module 1521 may provide, for example, a voice call service, a video call service, a text message service, or an Internet service through a communication network. The cellular module 1521 may identify and authenticate the electronic device 1501 in the communication network using the subscriber identification module 1524 (e.g., a SIM card). The cellular module 1521 may perform at least a part of functions that may be provided by the processor 1510. The cellular module 1521 may include a CP.

Each of the Wi-Fi module 1523, the Bluetooth module 1525, the GNSS module 1527 and the NFC module 1528 may include, for example, a processor for processing data transmitted/received through the modules. According to some various embodiments of the present disclosure, at least a part (e.g., two or more) of the cellular module 1521, the Wi-Fi module 1523, the Bluetooth module 1525, the GNSS module 1527, and the NFC module 1528 may be included in a single integrated chip (IC) or IC package.

The RF module 1529 may transmit/receive, for example, communication signals (e.g., RF signals). The RF module 1529 may include, for example, a transceiver, a power amp module (PAM), a frequency filter, a low noise amplifier (LNA), an antenna, or the like. According to another embodiment of the present disclosure, at least one of the cellular module 1521, the Wi-Fi module 1523, the Bluetooth module 1525, the GNSS module 1527, or the NFC module 1528 may transmit/receive RF signals through a separate RF module.

The SIM 1524 may include, for example, an embedded SIM and/or a card containing the subscriber identity module, and may include unique identification information (e.g., an integrated circuit card identifier (ICCID)) or subscriber information (e.g., international mobile subscriber identity (IMSI)).

The memory 1530 (e.g., the memory 130) may include, for example, an internal memory 1532 or an external memory 1534. The internal memory 1532 may include at least one of a volatile memory (e.g., a dynamic RAM (DRAM), a static RAM (SRAM), a synchronous dynamic RAM (SDRAM), or the like), a nonvolatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, a NOR flash memory, or the like)), a hard drive, or a solid state drive (SSD).

The external memory 1534 may include a flash drive such as a compact flash (CF), a secure digital (SD), a Micro-SD, a Mini-SD, an extreme digital (xD), a Multi-MediaCard (MMC), a memory stick, or the like. The external memory 1534 may be operatively and/or physically connected to the electronic device 1501 through various interfaces.

The sensor module 1540 may, for example, measure physical quantity or detect an operation state of the electronic device 1501 so as to convert measured or detected information into an electrical signal. The sensor module 1540 may include, for example, at least one of a gesture sensor 1540A, a gyro sensor 1540B, an atmospheric pressure sensor 1540C, a magnetic sensor 1540D, an acceleration sensor 1540E, a grip sensor 1540F, a proximity sensor 1540G, a color sensor 1540H (e.g., a red/green/blue (RGB) sensor), a biometric sensor 1540I, a temperature/humidity sensor 1540J, an illumination sensor 1540K, or an ultraviolet (UV) sensor 1540M. Additionally or alternatively, the sensor module 1540 may include, for example, an olfactory sensor (E-nose sensor), an electromyography (EMG) sensor, an electroencephalogram (EEG) sensor, an electrocardiogram (ECG) sensor, an infrared (IR) sensor, an iris recognition sensor, and/or a fingerprint sensor. The sensor module 1540 may further include a control circuit for controlling at least one sensor included therein. In some various embodiments of the present disclosure, the electronic device 1501 may further include a processor configured to control the sensor module 1540 as a part of the processor 1510 or separately, so that the sensor module 1540 is controlled while the processor 1510 is in a sleep state.

The input device 1550 may include, for example, a touch panel 1552, a (digital) pen sensor 1554, a key 1556, or an ultrasonic input device 1558. The touch panel 1552 may employ at least one of capacitive, resistive, infrared, and ultraviolet sensing methods. The touch panel 1552 may further include a control circuit. The touch panel 1552 may further include a tactile layer so as to provide a haptic feedback to a user.

The (digital) pen sensor 1554 may include, for example, a sheet for recognition which is a part of a touch panel or is separate. The key 1556 may include, for example, a physical button, an optical button, or a keypad. The ultrasonic input device 1558 may sense ultrasonic waves generated by an input tool through a microphone 1588 so as to identify data corresponding to the ultrasonic waves sensed.

The display 1560 (e.g., the display 160) may include a panel 1562, a hologram device 1564, or a projector 1566. The panel 1562 may have a configuration that is the same as or similar to that of the display 160 of FIG. 1. The panel 1562 may be, for example, flexible, transparent, or wearable. The panel 1562 and the touch panel 1552 may be integrated into a single module. The hologram device 1564 may display a stereoscopic image in a space using a light interference phenomenon. The projector 1566 may project light onto a screen so as to display an image. The screen may be disposed in the inside or the outside of the electronic device 1501. According to an embodiment of the present disclosure, the display 1560 may further include a control circuit for controlling the panel 1562, the hologram device 1564, or the projector 1566.

The interface 1570 may include, for example, an HDMI 1572, a USB 1574, an optical interface 1576, or a D-subminiature (D-sub) 1578. The interface 1570, for example, may be included in the communication interface 170 illustrated in FIG. 1. Additionally or alternatively, the interface 1570 may include, for example, a mobile high-definition link (MHL) interface, an SD card/multi-media card (MMC) interface, or an infrared data association (IrDA) interface.

The audio module 1580 may convert, for example, a sound into an electrical signal or vice versa. At least a portion of elements of the audio module 1580 may be included in the input/output interface 150 illustrated in FIG. 1. The audio module 1580 may process sound information input or output through a speaker 1582, a receiver 1584, an earphone 1586, or the microphone 1588.

The camera module 1591 is, for example, a device for shooting a still image or a video. According to an embodiment of the present disclosure, the camera module 1591 may include at least one image sensor (e.g., a front sensor or a rear sensor), a lens, an image signal processor (ISP), or a flash (e.g., an LED or a xenon lamp).

The power management module 1595 may manage power of the electronic device 1501. According to an embodiment of the present disclosure, the power management module 1595 may include a power management integrated circuit (PMIC), a charger integrated circuit (IC), or a battery or gauge. The PMIC may employ a wired and/or wireless charging method. The wireless charging method may include, for example, a magnetic resonance method, a magnetic induction method, an electromagnetic method, or the like. An additional circuit for wireless charging, such as a coil loop, a resonant circuit, a rectifier, or the like, may be further included. The battery gauge may measure, for example, a remaining capacity of the battery 1596 and a voltage, current or temperature thereof while the battery is charged. The battery 1596 may include, for example, a rechargeable battery and/or a solar battery.

The indicator 1597 may display a specific state of the electronic device 1501 or a part thereof (e.g., the processor 1510), such as a booting state, a message state, a charging state, or the like. The motor 1598 may convert an electrical signal into a mechanical vibration, and may generate a vibration or haptic effect. Although not illustrated, a processing device (e.g., a GPU) for supporting a mobile TV may be included in the electronic device 1501. The processing device for supporting a mobile TV may process media data according to the standards of digital multimedia broadcasting (DMB), digital video broadcasting (DVB), MediaFLO^{™}, or the like.

Each of the elements described herein may be configured with one or more components, and the names of the elements may be changed according to the type of an electronic device. In various embodiments of the present disclosure, an electronic device may include at least one of the elements described herein, and some elements may be omitted or other additional elements may be added. Furthermore, some of the elements of the electronic device may be combined with each other so as to form one entity, so that the functions of the elements may be performed in the same manner as before the combination.

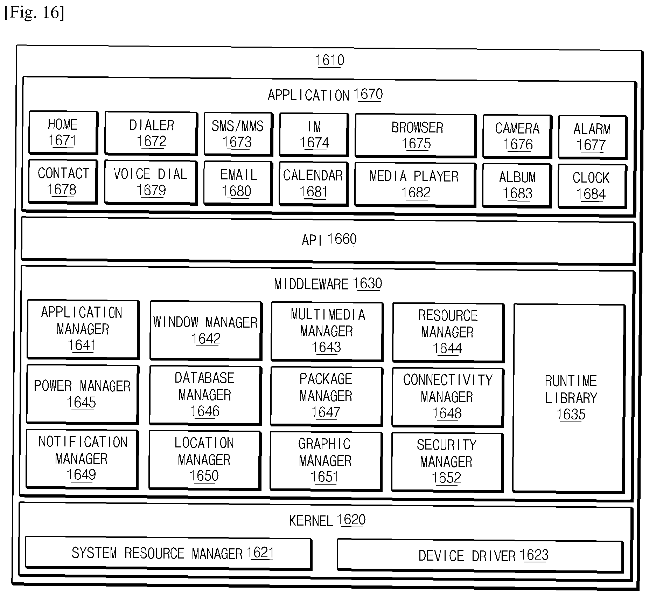

FIG. 16 is a block diagram illustrating a program module according to an embodiment of the present disclosure.

Referring to FIG. 16, a program module 1610 (e.g., the program 140) may include an OS for controlling a resource related to an electronic device (e.g., the electronic device 101) and/or various applications (e.g., the application 147) running on the OS. The operating system may be, for example, Android, iOS, Windows, Symbian, Tizen, or the like.

The program module 1610 may include a kernel 1620, a middleware 1630, an API 1660, and/or an application 1670. At least a part of the program module 1610 may be preloaded on an electronic device or may be downloaded from an external electronic device (e.g., the first electronic device 102, the second external electronic device 104, or the server 106).

The kernel 1620 (e.g., the kernel 141) may include, for example, a system resource manager 1621 or a device driver 1623. The system resource manager 1621 may perform control, allocation, or retrieval of a system resource. According to an embodiment of the present disclosure, the system resource manager 1621 may include a process management unit, a memory management unit, a file system management unit, or the like. The device driver 1623 may include, for example, a display driver, a camera driver, a Bluetooth driver, a shared memory driver, a USB driver, a keypad driver, a Wi-Fi driver, an audio driver, or an inter-process communication (IPC) driver.

The middleware 1630, for example, may provide a function that the applications 1670 require in common, or may provide various functions to the applications 1670 through the API 1660 so that the applications 1670 may efficiently use limited system resources in the electronic device. According to an embodiment of the present disclosure, the middleware 1630 (e.g., the middleware 143) may include at least one of a runtime library 1635, an application manager 1641, a window manager 1642, a multimedia manager 1643, a resource manager 1644, a power manager 1645, a database manager 1646, a package manager 1647, a connectivity manager 1648, a notification manager 1649, a location manager 1650, a graphic manager 1651, and a security manager 1652.

The runtime library 1635 may include, for example, a library module that a complier uses to add a new function through a programming language while the application 1670 is running. The runtime library 1635 may perform a function for input/output management, memory management, or an arithmetic function.

The application manager 1641 may mange, for example, a life cycle of at least one of the applications 1670. The window manager 1642 may manage a GUI resource used in a screen. The multimedia manager 1643 may recognize a format required for playing various media files and may encode or decode a media file using a codec matched to the format. The resource manager 1644 may manage a resource such as a source code, a memory, or a storage space of at least one of the applications 1670.

The power manager 1645, for example, may operate together with a basic input/ output system (BIOS) to manage a battery or power and may provide power information required for operating the electronic device. The database manager 1646 may generate, search, or modify a database to be used in at least one of the applications 1670. The package manager 1647 may manage installation or update of an application distributed in a package file format.

The connectivity manger 1648 may manage wireless connection of Wi-Fi, Bluetooth, or the like. The notification manager 1649 may display or notify an event such as message arrival, appointments, and proximity alerts in such a manner as not to disturb a user. The location manager 1650 may manage location information of the electronic device. The graphic manager 1651 may manage a graphic effect to be provided to a user or a user interface related thereto. The security manager 1652 may provide various security functions required for system security or user authentication. According to an embodiment of the present disclosure, in the case in which an electronic device (e.g., the electronic device 101) includes a phone function, the middleware 1630 may further include a telephony manager for managing a voice or video call function of the electronic device.

The middleware 1630 may include a middleware module for forming a combination of various functions of the above-mentioned elements. The middleware 1630 may provide a module specialized for each type of an operating system to provide differentiated functions. Furthermore, the middleware 1630 may delete a part of existing elements or may add new elements dynamically.

The API 1660 (e.g., the API 145) which is, for example, a set of API programming functions may be provided in different configurations according to an operating system. For example, in the case of Android or iOS, one API set may be provided for each platform, and, in the case of Tizen, at least two API sets may be provided for each platform.

The application 1670 (e.g., the application 147), for example, may include at least one application capable of performing functions such as a home 1671, a dialer 1672, an SMS/MMS 1673, an instant message (IM) 1674, a browser 1675, a camera 1676, an alarm 1677, a contact 1678, a voice dial 1679, an e-mail 1680, a calendar 1681, a media player 1682, an album 1683, a clock 1684, health care (e.g., measure an exercise amount or blood sugar), or environmental information provision (e.g., provide air pressure, humidity, or temperature information).

According to an embodiment of the present disclosure, the application 1670 may include an information exchange application for supporting information exchange between the electronic device (e.g., the electronic device 101) and an external electronic device (e.g., the first electronic device 102 or the second external electronic device 104). The information exchange application may include, for example, a notification relay application for relaying specific information to the external electronic device or a device management application for managing the external electronic device.

For example, the notification relay application may have a function for relaying, to an external electronic device (e.g., the first electronic device 102 or the second external electronic device 104), notification information generated in another application (e.g., an SMS/MMS application, an e-mail application, a health care application, an environmental information application, or the like) of the electronic device. Furthermore, the notification relay application may receive notification information from the external electronic device and may provide the received notification information to the user.

The device management application, for example, may manage (e.g., install, delete, or update) at least one function (e.g., turn-on/turn off of the external electronic device itself (or some elements) or the brightness (or resolution) adjustment of a display) of the external electronic device (e.g., the first electronic device 102 or the second external electronic device 104) communicating with the electronic device, an application running in the external electronic device, or a service (e.g., a call service, a message service, or the like) provided from the external electronic device.

According to an embodiment of the present disclosure, the application 1670 may include a specified application (e.g., a healthcare application of a mobile medical device) according to an attribute of the external electronic device (e.g., the first electronic device 102 or the second external electronic device 104). The application 1670 may include an application received from an external electronic device (e.g., the first electronic device 102 or the second external electronic device 104). The application 1670 may include a preloaded application or a third-party application downloadable from a server. The names of the elements of the program module 1610 illustrated may vary with the type of an operating system.

According to various embodiments of the present disclosure, at least a part of the program module 1610 may be implemented with software, firmware, hardware, or a combination thereof. At least a part of the program module 1610, for example, may be implemented (e.g., executed) by a processor (e.g., the processor 1510). At least a part of the program module 1610 may include, for example, a module, a program, a routine, sets of instructions, or a process for performing at least one function.

The term "module" used herein may represent, for example, a unit including one of hardware, software and firmware or a combination thereof. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific integrated circuit (ASIC) chip, a field-programmable gate array (FPGA), and a programmable-logic device for performing some operations, which are known or will be developed.

At least a part of devices (e.g., modules or functions thereof) or methods (e.g., operations) according to various embodiments of the present disclosure may be implemented as instructions stored in a non-transitory computer-readable storage medium in the form of a program module. In the case where the instructions are performed by a processor (e.g., the processor 120), the processor may perform functions corresponding to the instructions. The non-transitory computer-readable storage medium may be, for example, the memory 130.

The non-transitory computer-readable recording medium may include a hard disk, a floppy disk, a magnetic medium (e.g., a magnetic tape), an optical medium (e.g., CD-ROM, DVD), a magneto-optical medium (e.g., a floptical disk), or a hardware device (e.g., a ROM, a RAM, a flash memory, or the like). The program instructions may include machine language codes generated by compilers and high-level language codes that can be executed by computers using interpreters. The above-mentioned hardware device may be configured to be operated as one or more software modules for performing operations of various embodiments of the present disclosure and vice versa.

A module or a program module according to various embodiments of the present disclosure may include at least one of the above-mentioned elements, or some elements may be omitted or other additional elements may be added. Operations performed by the module, the program module or other elements according to various embodiments of the present disclosure may be performed in a sequential, parallel, iterative or heuristic way. Furthermore, some operations may be performed in another order or may be omitted, or other operations may be added.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (101) comprising:
a memory (130);
a display (160) configured to detect a force input based on an external pressure; and
a processor (120) electrically coupled with the memory (130) and the display (160),
wherein the processor (120) is configured to:
execute an application that is operable corresponding to the force input;
control to store history information in the memory (130) on use of the electronic device (101), wherein the history information is related to an input field (705), to which the force input is applied, on an execution screen of the application;
filter multiple options of the history information according to attributes of the input field (705); and
if the pressure of the force input (710) is a preset pressure or more, control to output via the display a window including a plurality of areas and output the filtered multiple options of the history information to the areas,
wherein the plurality of areas include a first area of image data and a second area of text data, and
wherein the image data and the text data have been recently copied and stored in a clipboard.

2. The electronic device (101) of claim 1, wherein the processor (120) is configured to control to store the history information in the memory with a link to an attribute of a field of an input template related with the application.

3. A method for outputting a screen, which is executed in an electronic device, the method comprising:
executing (210) an application that is operable corresponding to a force input based on pressure applied to a display;
storing (220) history information on use of the electronic device, wherein the history information is related to an input field (705), to which the force input is applied, on an execution screen of the application;
detecting (230) occurrence of the force input to the input field (705);
filtering multiple options of the history information according to attributes of the input field (705); and
if the pressure of the force input (710) is a preset pressure or more, outputting (240) a window including a plurality of areas and outputting (240) the filtered multiple options of the history information to the areas,
wherein the plurality of areas include a first area of image data and a second area of text data, and
wherein the image data and the text data have been recently copied and stored in a clipboard.

4. The method of claim 3, wherein the storing (220) of the history information includes:
storing the history information with a link to an attribute of a field of an input template related with the application.

## Patentansprüche

1. Elektronische Vorrichtung (101), die Folgendes umfasst:
einen Speicher (130);
ein Display (160), das konfiguriert ist, um eine Krafteingabe basierend auf einem externen Druck zu erkennen; und
einen Prozessor (120), der mit dem Speicher (130) und dem Display (160) elektrisch gekoppelt ist,
wobei der Prozessor (120) konfiguriert ist zum:
Ausführen einer Anwendung, die entsprechend der Krafteingabe betreibbar ist;
Steuern, um Verlaufsinformationen in dem Speicher (130) bei Verwendung der elektronischen Vorrichtung (101) zu speichern, wobei sich die Verlaufsinformationen auf ein Eingabefeld (705), auf das die Krafteingabe angewendet wird, auf einem Ausführungsbildschirm der Anwendung beziehen;
Filtern mehrerer Optionen der Verlaufsinformationen gemäß Attributen des Eingabefelds (705); und
wenn der Druck der Krafteingabe (710) ein voreingestellter Druck oder größer ist, Steuern, um über das Display ein Fenster auszugeben, das eine Vielzahl von Bereichen enthält, und die gefilterten mehreren Optionen der Verlaufsinformationen an die Bereiche auszugeben,
wobei die Vielzahl von Bereichen einen ersten Bereich von Bilddaten und einen zweiten Bereich von Textdaten umfassen, und
wobei die Bilddaten und die Textdaten kürzlich kopiert und in einer Zwischenablage gespeichert wurden.

2. Elektronische Vorrichtung (101) nach Anspruch 1, wobei der Prozessor (120) konfiguriert ist, um das Speichern der Verlaufsinformationen in dem Speicher mit einem Link zu einem Attribut eines Felds einer Eingabemaske im Zusammenhang mit der Anwendung zu steuern.

3. Verfahren zum Ausgeben eines Bildschirms, das in einer elektronischen Vorrichtung ausgeführt wird, wobei das Verfahren Folgendes umfasst:
Ausführen (210) einer Anwendung, die entsprechend einer Krafteingabe basierend auf einem Druck betreibbar ist, der auf ein Display ausgeübt wird;
Speichern (220) von Verlaufsinformationen über die Verwendung der elektronischen Vorrichtung, wobei sich die Verlaufsinformationen auf ein Eingabefeld (705), auf das die Krafteingabe angewendet wird, auf einem Ausführungsbildschirm der Anwendung beziehen;
Erkennen (230) des Auftretens der Krafteingabe in das Eingabefeld (705);
Filtern mehrerer Optionen der Verlaufsinformationen gemäß Attributen des Eingabefelds (705); und
wenn der Druck der Krafteingabe (710) ein voreingestellter Druck oder größer ist, Ausgeben (240) eines Fensters, das eine Vielzahl von Bereichen enthält, und Ausgeben (240) der gefilterten mehreren Optionen der Verlaufsinformationen an die Bereiche,
wobei die Vielzahl von Bereichen einen ersten Bereich von Bilddaten und einen zweiten Bereich von Textdaten enthalten, und
wobei die Bilddaten und die Textdaten kürzlich kopiert und in einer Zwischenablage gespeichert wurden.

4. Verfahren nach Anspruch 3, wobei das Speichern (220) der Verlaufsinformationen Folgendes enthält:
Speichern der Verlaufsinformationen mit einem Link zu einem Attribut eines Felds einer Eingabemaske im Zusammenhang mit der Anwendung.

## Revendications

1. Dispositif électronique (101) comprenant :
une mémoire (130) ;
une unité d'affichage (160) configurée pour détecter une entrée de force sur la base d'une pression externe ; et
un processeur (120) couplé électriquement à la mémoire (130) et à l'unité d'affichage (160),
où le processeur (120) est configuré pour :
exécuter une application qui peut être commandée en fonction de l'entrée de force ;
commander de stocker des informations d'historique dans la mémoire (130) lors de l'utilisation du dispositif électronique (101), où les informations d'historique sont liées à un champ de saisie (705), auquel l'entrée de force est appliquée, sur un écran d'exécution de l'application ;
filtrer de multiples options des informations d'historique en fonction des attributs du champ de saisie (705) ; et
si la pression de l'entrée de force (710) est une pression préréglée ou plus, commander la sortie via l'unité d'affichage d'une fenêtre comprenant une pluralité de zones et sortir les multiples options filtrées des informations d'historique vers les zones,
où la pluralité de zones comprend une première zone de données d'image et une deuxième zone de données de texte, et
où les données d'image et les données de texte ont été récemment copiées et stockées dans un presse-papiers.

2. Dispositif électronique (101) selon la revendication 1, où le processeur (120) est configuré pour commander de stocker les informations d'historique dans la mémoire avec un lien vers un attribut d'un champ d'un masque de saisie lié à l'application.

3. Procédé de sortie d'un écran, qui est exécuté dans un dispositif électronique, le procédé comprenant :
exécuter (210) une application qui peut être commandée en fonction d'une entrée de force sur la base d'une pression appliquée à une unité d'affichage ;
stocker (220) des informations d'historique sur l'utilisation du dispositif électronique, où les informations d'historique sont liées à un champ de saisie (705), auquel l'entrée de force est appliquée, sur un écran d'exécution de l'application ;
détecter (230) l'occurrence de l'entrée de force dans le champ de saisie (705) ;
filtrer de multiples options des informations d'historique selon les attributs du champ de saisie (705) ; et
si la pression de l'entrée de force (710) est une pression prédéfinie ou plus, délivrer (240) une fenêtre comprenant une pluralité de zones et délivrer (240) les multiples options filtrées des informations d'historique aux zones,
où la pluralité de zones comprend une première zone de données d'image et une deuxième zone de données de texte, et
où les données d'image et les données de texte ont été récemment copiées et stockées dans un presse-papiers.

4. Procédé selon la revendication 3, où le stockage (220) des informations d'historique comprend :
stocker les informations d'historique avec un lien vers un attribut d'un champ d'un masque de saisie lié à l'application.
